(19) Europäisches Patentamt / European Patent Office / Office européen des brevets

(11) **EP 3 738 171 B1**

(12) **EUROPÄISCHE PATENTSCHRIFT**

(45) Veröffentlichungstag und Bekanntmachung des Hinweises auf die Patenterteilung:
**14.12.2022   Patentblatt 2022/50**

(21) Anmeldenummer: **18829832.7**

(22) Anmeldetag: **20.12.2018**

(51) Internationale Patentklassifikation (IPC):
*H01Q 1/27* (2006.01)   *H01Q 15/14* (2006.01)
*A41D 13/01* (2006.01)   *A61B 5/00* (2006.01)
*G01S 13/04* (2006.01)   *G01S 13/93* (2020.01)

(52) Gemeinsame Patentklassifikation (CPC):
**H01Q 1/273; H01Q 15/14;** A41D 13/01;
G01S 13/04; G01S 2013/9329

(86) Internationale Anmeldenummer:
**PCT/EP2018/086051**

(87) Internationale Veröffentlichungsnummer:
**WO 2019/137779 (18.07.2019 Gazette 2019/29)**

(54) **ELEKTROMAGNETISCHE STRAHLUNG REFLEKTIERENDE STRUKTUR, KLEIDUNGSSTÜCK MIT EINER ELEKTROMAGNETISCHE STRAHLUNG REFLEKTIERENDEN STRUKTUR, VERWENDUNG EINER SOLCHEN ELEKTROMAGNETISCHE STRAHLUNG REFLEKTIERENDEN STRUKTUR SOWIE SYSTEM ZUR DETEKTION EINES BENUTZERS**

ELECTROMAGNETIC RADIATION REFLECTING STRUCTURE, GARMENT WITH AN ELECTROMAGNETIC RADIATION REFLECTING STRUCTURE, USE OF A SUCH ELECTROMAGNETIC RADIATION REFLECTING STRUCTURE, AS WELL AS A SYSTEM FOR DETECTION OF A USER

STRUCTURE RÉFLÉCHISSANTE DE RAYONNEMENT ÉLECTROMAGNÉTIQUE, VÊTEMENT AVEC UNE STRUCTURE RÉFLÉCHISSANTE DE RAYONNEMENT ÉLECTROMAGNÉTIQUE, UTILISATION D'UNE TELLE STRUCTURE RÉFLÉCHISSANTE DE RAYONNEMENT ÉLECTROMAGNÉTIQUE, AINSI QUE SYSTÈME DE DÉTECTION D'UN UTILISATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2018   DE 102018200265**

(43) Veröffentlichungstag der Anmeldung:
**18.11.2020   Patentblatt 2020/47**

(73) Patentinhaber: **Robert Bosch GmbH**
**70442 Stuttgart (DE)**

(72) Erfinder:
• **WOSTRADOWSKI, Uwe**
  **71263 Weil Der Stadt-Merklingen (DE)**
• **HOLZ, Rainer**
  **71672 Marbach (DE)**

(56) Entgegenhaltungen:
EP-A1- 1 294 052          WO-A2-2009/144595
DE-A1-102009 021 851      JP-A- 2004 275 699
US-A1- 2015 029 050

**Beschreibung**

Die vorliegende Erfindung betrifft eine elektromagnetische Strahlung reflektierende Struktur, ein Kleidungsstück mit einer solchen elektromagnetische Strahlung reflektierenden Struktur, eine Verwendung einer elektromagnetische Strahlung reflektierenden Struktur sowie ein System zur Detektion eines Benutzers.

Stand der Technik

In den letzten Jahren haben sich Personenkraftwagen, die mit einem Automotive-Radar, welches auch Kraftfahrzeugradar oder Automobilradar genannt wird, ausgestattet sind, weit verbreitet. Das Automobilradar misst von dem Fahrzeug aus gesehen jeweils Abstand und Richtung zu anderen Fahrzeugen, Hindernissen oder anderen Gegenständen. Ferner hilft das Automobilradar dem Fahrer bei Spurwechseln oder beim Bremsen zur Verhinderung von Unfällen. Darüber hinaus wird das Automobilradar verwendet, um den Fahrer bei Gefahren zu warnen oder zur Steuerung von im KFZ verbauten Geräten oder Systemen wie z.B. Sicherheitsgurten oder Airbags.

Das Europäisches Neuwagen-Bewertungs-Programm (engl. European New Car Assessment Programme, Euro NCAP) ist eine Gesellschaft europäischer Verkehrsministerien, Automobilclubs und Versicherungsverbände, welche Crashtests mit unterschiedlichen Automobiltypen durchführt und die Sicherheit der installierten Sicherheitssysteme bewertet.

Ein Aspekt ist hierbei der Fußgängerschutz, durch den Fußgänger bei einem Unfall besser geschützt werden sollen. Hierbei wird bewertet, welche Verletzungsgefahr die Frontpartie für Fußgänger darstellt. Hier gibt es unterschiedliche Ansätze, wie ein effektiver Schutz der Fußgänger erreicht werden kann.

Zum einen sind dies z.B. Motorhauben, die sich bei einem Unfall automatisch einige Zentimeter anheben und so mehr Deformationsraum bieten. Eine weitere Technik sind z.B. Airbags für den Frontbereich, die beim Aufprall auf einen Fußgänger ausgelöst werden und sich nach außen öffnen. Seit kurzem gibt es auch einen Test zur Bewertung des Notbremsassistenten zur Fußgängererkennung.

Ein Faktor, der das Ausmaß der Verletzung des Fußgängers bei einem Zusammenstoß wesentlich beeinflusst, ist die Fahrzeuggeschwindigkeit zum Zeitpunkt des Aufpralls. Immer mehr Fahrzeugherstellern bieten Systeme an, die vor einem Zusammenstoß mit einem Fußgänger die Geschwindigkeit des Fahrzeugs deutlich reduzieren oder im besten Fall das Fahrzeug zum Stillstand bringen sollen.

Die oben genannten Notbremsassistenten zur Fußgängererkennung können entweder durch Kamerasysteme oder Radarsysteme realisiert werden. In den letzten Jahren sind Automobilradarsysteme immer leistungsfähiger geworden. Die Fußgängererkennung mittels Radar ist Gegenstand gegenwärtiger Forschung. Ein großes Problem hierbei ist es, sich bewegende Benutzer von nicht bewegten Gegenständen zu unterscheiden. Im Gegensatz zu nicht bewegten Gegenständen weisen die reflektierten Radarfrequenzspektren von Fußgängern oder Fahrradfahrern charakteristische zeitabhängige Dopplerverschiebungen auf, welche von Bewegungen der Arme und Hände stammen. Der damit verbundene Effekt wird Mikro-Doppler-Effekt und die damit verbundenen Strukturen in den entsprechenden relativen Frequenzverteilungen werden Mikro-Doppler-Signaturen oder Mikro-Doppler-Komponenten genannt. Die mechanischen Vibrationen oder Rotationen von Strukturen eines im Radar erkennbaren größeren Objektes werden Mikrobewegung genannt.

Wenn ein Radargerät ein elektromagnetisches Signal zu einem Ziel oder Objekt sendet, interagiert das Signal mit dem Ziel und kehrt zu dem Radargerät zurück. Die Änderungen der Eigenschaften des zurückgekehrten Signals spiegeln die Eigenschaften des Ziels wieder. Wenn das Ziel sich bewegt, ist die Frequenz des reflektierten Signals wegen des Dopplereffekts verschoben. Die Dopplerfrequenzverschiebung kann benutzt werden, um die Radialgeschwindigkeit des sich bewegenden Ziels zu bestimmen. Wenn das Ziel oder irgendeine Struktur auf dem Ziel zusätzlich zur Translationsbewegung des Ziels in radialer Richtung vibriert oder rotiert, wird dies eine Frequenzmodulation des zurückgekehrten Signals hervorrufen, welche Seitenbänder um die Dopplerfrequenz des Ziels erzeugt. Diese Modulation wird Mikro-Doppler-Effekt genannt. Der Mikro-Doppler-Effekt kann als ein Charakteristikum der Interaktion zwischen den vibrierenden oder rotierenden Strukturen und dem Zielkörper gesehen werden.

Die DE 10 2009 021 851 A1 beschreibt einen radarreflektierender Reflektor, der an einer Kleidung eines Benutzers angebracht sein kann. Diese Kleidung kann beispielsweise als Jacke, als Hose oder als Schutzhelm ausgebildet sein. Der Reflektor besteht aus einem metallischen Material und kann beispielsweise als Stanniolstreifen gebildet sein. Als Teil einer Jacke kann er sowohl den Oberkörper, als auch die Oberarme eines Benutzers bedecken.

Die EP 1 294 052 A1 betrifft einen Licht und Radarwellen reflektierenden Streifen, der auf einer Vielzahl verschiedener Rettungsgerätschaften wie Schwimmwesten, Rettungsringe, Überlebensanzüge und Rettungsboote angebracht werden kann. An einem Überlebensanzug ist er unter anderem zur Anbringung an den Unterarmen und an den Beinen vorgesehen.

Die JP 2004-275699 A offenbart eine Jacke, welche am Rumpf radarreflektierende Streifen aus silberbeschichteten Nylonfasern aufweist.

Offenbarung der Erfindung

Die elektromagnetische Strahlung reflektierende Struktur reflektiert auf sie fallende elektromagnetische Strahlung und vergrößert so einen Radarquerschnitt eines Benutzers. Unter einem Benutzer kann vorliegend eine Person oder ein Tier verstanden werden, insbesondere Verkehrsteilnehmer wie zum Beispiel Fußgänger, Fahrradfahrer oder am Verkehr teilnehmende Tiere. Unter Verkehr kann der Straßenverkehr, Schienenverkehr, Logistikverkehr (automatisierte Transportsysteme) oder auch Schiffs- und Luftverkehr verstanden werden. Unter einem Benutzer können auch Sachen oder Gegenstände verstanden werden, welche eine solche elektromagnetische Strahlung reflektierende Struktur benutzen können, zum Beispiel Drohnen und Roboter in der Fertigung.

Zur Vergrößerung des Radarquerschnitts des Benutzers ist es notwendig, dass die elektromagnetische Strahlung reflektierende Struktur am Körper des Benutzers angebracht ist. Durch die Vergrößerung des Radarquerschnitts wird vorteilhafterweise erreicht, dass der Benutzer im Radar leichter erkannt werden kann.

Der Radarquerschnitt ist im Allgemeinen von vielen Faktoren abhängig. Eine analytische Bestimmung des Radarquerschnitts ist nur bei einfachen Körpern möglich. Der Radarquerschnitt von der Körperform und vom Verhältnis der Strukturabmessungen des Körpers zur Wellenlänge ist abhängig. Der Radarquerschnitt eines Objektes ist definiert als die Querschnittfläche einer perfekt reflektierenden Kugel, die eine Reflexion gleicher Stärke erzeugen würde wie das betrachtete Objekt. Für Objekte, deren Abmessungen mindestens zehnmal größer als die Wellenlänge sind, ist der Radarquerschnitt frequenzunabhängig. Der entsprechende Bereich wird optischer frequenzunabhängigen Bereich genannt. Die vorliegende Erfindung bewegt sich in diesem Bereich.

Die Einheit des Radarquerschnitts ist der Quadratmeter. Typische Werte des Radarquerschnitts liegen zwischen $10^{-5}$ m$^2$ für Insekten und $10^6$ m$^2$ für große Schiffe. Nachfolgend sind beispielhaft typische Werte für ein Zentimeterwellenradar aufgeführt: Insekt: 0,00001 m$^2$, Vogel: 0,01 m$^2$, Flugzeuge mit Tarnkappentechnik: <0,1 m$^2$, Flugabwehrraketen: ≈0,1 m$^2$, Mensch: 1 m$^2$, kleines Kampfflugzeug: 2-3 m$^2$, großes Kampfflugzeug: 5-6 m$^2$, Transportflugzeug: bis zu 100 m$^2$, Winkelreflektor mit 1,5 m Kantenlänge: ≈20.000 m, Küstenmotorschiff (55 m Länge): 300-4000 m$^2$, Fregatte (103 m Länge): 5000-100.000 m$^2$, Containerschiff (212 m Länge): 10.000-80.000 m$^2$.

Aufgrund dieser großen Spannweite des Radarquerschnitts wird oft eine logarithmische Skala mit einem Referenzwert $\sigma_{ref}$ = 1 m$^2$ verwendet. Hierbei gilt:

$$\sigma_{dBsm} = \sigma_{dBm^2} = 10 \log_{10}\left(\frac{\sigma_{m^2}}{\sigma_{ref}}\right) = 10 \log_{10}\left(\frac{\sigma_{m^2}}{1 m^2}\right)$$

Somit entspricht einem Radarquerschnitt von 1 m$^2$ ein Wert der logarithmischen Skala von 0 dBsm = 0 dBm$^2$ und einem Radarquerschnitt von 0,01 m$^2$ ein Wert der logarithmischen Skala von -20 dBm$^2$. Eine Kugel mit 4 cm Durchmesser hat zum Beispiel einen Radarquerschnitt von 1,54 dBm$^2$.

Unter Radar kann insbesondere ein in ein Automobil eingebautes Radargerät verstanden werden. Vorliegend kann jedoch unter dem Begriff Radar auch jedes andere Radarsystem verstanden werden, zum Beispiel im Schienenverkehr eingesetzte Radarsysteme.

Die elektromagnetische Strahlung reflektierende Struktur ist an einer Stelle eines Körpers des Benutzers angebracht, wobei bei einer gewöhnlichen Fortbewegung des Benutzers die elektromagnetische Strahlung reflektierende Struktur aufgrund ihrer Anbringung an der Stelle des Körpers einen Mikro-Doppler-Effekt erzeugt, so dass ein Radarquerschnitt des Benutzers vergrößert wird. Wie bereits oben erklärt, ist dies eine Stelle am Körper, welche sich stark, d.h. mit einer großen Amplitude relativ zu einem Radargerät, bewegt. Durch dieses Merkmal wird vorteilhafterweise erreicht, dass der Mikro-Doppler-Effekt der elektromagnetische Strahlung reflektierenden Struktur besonders groß ist, was dazu führt, dass der Benutzer, welcher eine elektromagnetische Strahlung reflektierende Struktur an seinem Körper trägt, im Radar leichter erkannt werden kann.

Die Reflektivität der elektromagnetische Strahlung reflektierenden Struktur muss größer als ein vorgegebener Wert sein. Dieser vorgegebene Wert darf nicht zu klein sein. Die elektromagnetische Strahlung reflektierende Struktur soll eine Reflektivität haben, so dass die elektromagnetische Strahlung reflektierende Struktur in dem Radar gut erkannt werden kann. Dies ist insbesondere dann der Fall, wenn der Radarquerschnitt der elektromagnetische Strahlung reflektierenden Struktur größer als der Radarquerschnitt eines Verkehrsteilnehmers oder eines im Straßenverkehr sich bewegenden Objektes, wie zum Beispiel ein Auto, ist. Dies ist jedoch auch dann der Fall, wenn die elektromagnetische Strahlung reflektierende Struktur einen größeren Mikro-Doppler-Effekt aufweist als andere Verkehrsteilnehmer oder andere sich im Straßenverkehr bewegende Objekte.

Die Reflektivität einer ebenen, elektromagnetischen Welle, welche auf eine Ebene Grenzfläche trifft, ergibt sich aus den Fresnel'schen Gleichungen oder Formeln, welche einen Zusammenhang zwischen reflektierter und einfallender elektromagnetischer Welle an einer Grenzfläche in Abhängigkeit von den Materialeigenschaften liefern. Das erste Material an der Grenzfläche ist Luft mit einer relativen Permittivität von $\varepsilon_{r1} = \varepsilon_{rges1} = 1$ und einer Permeabilität von $\mu_{r1} = 1$ und einer Leitfähigkeit von $\kappa_1 = 0$. Das zweite Material an der Grenzfläche hat eine relative Permittivität $\varepsilon_{r2} > 1$, einer Permeabilität $\mu_{r2} \geq 1$ und eine Leitfähigkeit von $\kappa_2 \geq 0S$. Die komplexe relative Gesamtpermittivität $\varepsilon_{rges2}$ ergibt sich zu

$$\varepsilon_{rges2} = \varepsilon_{r2} - j \cdot \frac{\kappa_2}{\omega \varepsilon_0},$$

wobei $\omega = 2\pi f$ die Kreisfrequenz, $f$ die Frequenz des Radars und $\varepsilon_0$ die Permittivität des Vakuums sind.

Die komplizierten Ausdrücke für die Reflektivität der Fresnel'schen Gleichungen vereinfachen sich somit zu

$$R_P = \frac{\varepsilon_{rges2} - \sqrt{\varepsilon_{rges2}\mu_{r2}}}{\varepsilon_{rges2} + \sqrt{\varepsilon_{rges2}\mu_{r2}}}$$

$$R_S = \frac{\mu_{r2} - \sqrt{\varepsilon_{rges2}\mu_{r2}}}{\mu_{r2} + \sqrt{\varepsilon_{rges2}\mu_{r2}}}$$

Die Reflexionsfaktoren sind gleich dem Verhältnis aus reflektiertem und einfallendem elektrischen Feldvektor. Hierbei ist $R_P$ die Reflektivität, falls die Polarisation parallel zur Ein- und Ausfallsebene ist, und Rs die Reflektivität, falls die Polarisation senkrecht zur Ein- und Ausfallsebene ist.

Hieran sieht man, dass die Reflektivität von der Polarisationsebene des Radars und der Lage der reflektierenden Formen in der Polarisationsebene abhängt. Der Radarrückstreuquerschnitt einer der oben genannten beispielhaften Geometrien kann im Allgemeinen nur durch numerische Simulation mit den korrekten Materialeigenschaften oder durch Messung erfolgen.

Das Material der elektromagnetische Strahlung reflektierenden Struktur weist eine Leitfähigkeit unter 100 S/m auf, d.h. eine geringen Leitfähigkeit. Die Reflektivität des Materials wird durch die Permittivität und oder Permeabilität gegenüber der Leitfähigkeit dominiert. Es ist bevorzugt, dass das Material der elektromagnetische Strahlung reflektierenden Struktur eine Paste oder eine Tinte ist.

Es werden zwei Fälle unterschieden: falls die relative Permeabilität zwischen 100 und $10^5$ liegt, so liegt die relative Permittivität zwischen 1 und 14.

Falls die relative Permeabilität zwischen 1 und 100 liegt, so liegt die relative Permittivität zwischen 7 und 14.

Die Oberfläche der elektromagnetische Strahlung reflektierenden Struktur ist größer als 1000 mm$^2$.

Gemäß einer bevorzugten Ausführungsform weist die elektromagnetische Strahlung reflektierende Struktur einen Flächenfüllfaktor zwischen 80 und 100% auf und ist die Oberfläche der elektromagnetische Strahlung reflektierenden Struktur größer als 2000 mm$^2$. Der Flächenfüllfaktor ist definiert als das Verhältnis der Oberfläche der Struktur, welche mit Material gefüllt ist, welche elektromagnetische Strahlung reflektiert, zur Oberfläche der elektromagnetische Strahlung reflektierenden Struktur. Bevorzugt weist die elektromagnetische Strahlung reflektierende Struktur eine zweidimensionale Oberfläche auf. In diesem Fall ist die Oberfläche der elektromagnetische Strahlung reflektierende Struktur definiert als die Oberfläche einer der zwei Seiten der zweidimensionalen Oberfläche. Dieses Merkmal hat den Vorteil, dass prozentual auf die Gesamtfläche bezogen weniger Material für die elektromagnetische Strahlung reflektierende Struktur benötigt wird.

Für Flächen mit einem Flächenfüllfaktor von 80 % bis 100%, muss die Fläche für eine Struktur mit einem Radarquerschnitt über 1 m$^2$ mit einem der oben genannten Materialkombinationen maximal verdoppelt vergrößert werden, um die Materialeigenschaften auszugleichen.

Gemäß noch einer bevorzugten Ausführungsform weist die elektromagnetische Strahlung reflektierende Struktur einen Flächenfüllfaktor zwischen 40 und 80 % auf und ist die Oberfläche der elektromagnetische Strahlung reflektierenden Struktur größer als 4000 mm$^2$. Dieses Merkmal hat den Vorteil, dass prozentual auf die Gesamtfläche bezogen weniger Material für die elektromagnetische Strahlung reflektierende Struktur benötigt wird.

Für einen Ausgleich des Flächenfüllfaktors im Bereich von nahe 0% bis 80% muss für jede Halbierung des Flächenfüllfaktors die Fläche verdoppelt werden, um wieder einen Radarquerschnitt von mehr als 1 m$^2$ zu bekommen.

Gemäß noch einer weiteren bevorzugten Ausführungsform weist die elektromagnetische Strahlung reflektierende Struktur einen Flächenfüllfaktor kleiner als 100 % auf und ist ein kleinster Abstand zwischen leitenden Teilen der elektromagnetische Strahlung reflektierenden Struktur kleiner als 1,95 mm. Dieses Merkmal hat den Vorteil, dass wesentlich weniger Material benutzt werden kann und trotzdem die maximale oder eine sehr hohe Reflektivität erzielt werden kann.

Der Wert von 1,95 mm entspricht der halben Wellenlänge der benutzten Radarstrahlung für eine Frequenz von 76,5 GHz. Dies kann physikalisch so erklärt werden, dass falls die Struktur eine Öffnung hat, welche kleiner als die Hälfte der Wellenlänge ist, keine elektromagnetische Strahlung durch die Öffnungen treten kann und somit reflektiert wird.

Gemäß einer bevorzugten Ausführungsform ist ein Radarquerschnitt der elektromagnetische Strahlung reflektierenden Struktur größer oder gleich 0 dBm$^2$. Bevorzugt ist der Radarquerschnitt der elektromagnetische Strahlung reflektierenden Struktur größer oder gleich 0,5 dBm$^2$, besonders bevorzugt größer oder gleich 1 dBm$^2$. Ein Radarquerschnitt eines Benutzers schwankt in der Regel zeitlich und winkellageabhängig stark und liegt zwischen 0,1 und 1 dBm$^2$. Bevorzugt ist der Radarquerschnitt der elektromagnetische Strahlung reflektierenden Struktur größer als ein maximaler Radarquerschnitt eines Benutzers. Durch dieses Merkmal wird vorteilhafterweise erreicht, dass sich der Radarquerschnitt des Benutzers, welcher eine elektromagnetische Strahlung reflektierende Struktur an seinem Körper trägt, mindestens verdoppelt, was dazu führt, dass er im Radar einfacher, insbesondere früherer und sicherer, erkannt werden kann.

Die Vergrößerung des Radarquerschnitts erfolgt durch eine Vergrößerung mindestens einer Mikro-Doppler-Komponente. Durch eine Vergrößerung mindestens einer Mikro-Doppler-Komponente wird vorteilhafterweise erreicht, dass ein Benutzer, welcher sich im Straßenverkehr gewöhnlich fortbewegt, im Radarsignal einfacher erkannt werden kann. Dies liegt daran, dass die Mikro-Doppler-Signaturen vergrößert wurden.

Hierbei ist bevorzugt mindestens eine Mikro-Doppler-Signatur größer als ein entsprechender Signaluntergrund, der unter anderem durch Mikro-Doppler-Signaturen anderer Objekte erzeugt werden kann. Hierdurch kann die mindestens eine Mikro-Doppler-Signatur vorteilhafterweise vom Signaluntergrund unterschieden werden.

Bevorzugt ist der Mikro-Doppler-Effekt größer als 70% des maximalen Mikro-Doppler-Effekts am Körper des Benutzers. Der maximale Mikro-Doppler-Effekt am Körper des Benutzers ist an der Stelle, welche sich relativ zum Radargerät gesehen mit der größten Amplitude bewegt. Durch dieses Merkmal wird vorteilhafterweise erreicht, dass die Mikro-Doppler-Komponente besonders stark vergrößert ist. Dies hat wiederum den Effekt, dass der Benutzer im Radarsignal einfacher zu klassifizieren ist.

Gemäß einer Ausführungsform ist die Stelle des Körpers des Benutzers, an der die elektrische Struktur angebracht ist, an einem Arm oder einem Bein. Bevorzugt ist diese Stelle in der Nähe einer Hand oder eines Fußes. Benutzer, welche sich im Straßenverkehr gewöhnlich fortbewegen, weisen in der Regel relativ große Geschwindigkeitsabweichungen zur mittleren Geschwindigkeit durch Fußbewegungen und/oder Armbewegungen auf. Hierbei weisen Fußgänger in der Regel größere Armbewegungen als Fahrradfahrer auf. Durch die Anbringung der elektromagnetische Strahlung reflektierenden Struktur an einem Arm oder einem Fuß wird vorteilhafterweise der Mikro-Doppler-Effekt vergrößert.

Gemäß einer Ausführungsform ist die elektromagnetische Strahlung reflektierende Struktur entlang mindestens einer Dimension periodisch. Dies hat den Vorteil, dass die elektromagnetische Strahlung reflektierende Struktur im reflektierten Radarsignal besser erkannt werden kann, da die reflektierte und überlagerte Leistung aller Grundelemente einer periodischen Struktur größer ist als bei einer nicht periodischen Struktur. Besonders bevorzugt ist die Periode der elektromagnetische Strahlung reflektierenden Struktur die halbe mittlere Freiraumwellenlänge des Radars. Die Frequenz des Radars liegt bevorzugt zwischen 76 und 81 GHz, besonders bevorzugt zwischen 76 und 77 GHz. Bei einer Frequenz von 76,5 GHz beträgt die mittlere Freiraumwellenlänge 3,9 mm.

Bevorzugt ist die elektromagnetische Strahlung reflektierende Struktur entlang zweier Dimensionen periodisch. Dies hat den Vorteil, dass die Erkennbarkeit im Radarsignal weiter erhöht ist. Hierbei kann die elektromagnetische Strahlung reflektierende Struktur aus jeder Raumrichtung von Radargeräten erfasst werden. Ferner kann die elektromagnetische Strahlung reflektierende Struktur über den gesamten Bewegungsablauf unabhängig von der Bewegungsrichtung erfasst werden.

Eine elektromagnetische Strahlung reflektierende Struktur mit periodischer Struktur kann bevorzugt zum Beispiel eine frequenzselektive Oberfläche oder ein Metamaterial wie zum Beispiel ein DNG, AMC, etc. sein. Unter einer frequenzselektiven Oberfläche (engl. frequency selective surface, FSS) versteht man eine Fläche, die elektromagnetische Strahlung, insbesondere im Radiofrequenzbereich bis zu einigen GHz, frequenzabhängig reflektiert. Hierbei können FSS-Beschichtungen einzelne Frequenzen ausblenden, z.B. um Störungen durch einen starken Sender zu unterdrücken, ohne gleichzeitig den Empfang aller Sender zu verhindern. Ein durchstimmbares Radar kann z.B. anhand der FSS-Reflexionsmuster Flugobjekte unterscheiden. Die Abkürzung DNG steht für doppelt negative Metamaterialen (engl. double negative metamaterials), welche auch als NIMs (engl. negative-index metamaterials) bekannt sind. Bei den DNG ist sowohl die Dielektrizitätskonstante als auch die magnetische Permeabilität negativ, was zu einem negativen Brechungsindex mit kontraintuitiven Konsequenzen, wie z.B. perfekten Linsen oder Tarnkappen führt.

Die elektromagnetische Strahlung reflektierende Struktur ist im Allgemeinen dreidimensional. Bevorzugt ist die elektromagnetische Strahlung reflektierende Struktur zweidimensional. Hierbei wird ein topologischer Dimensionsbegriff zu Grunde gelegt, wonach die Oberfläche einer Kugel zweidimensional ist. Eine solche zweidimensionale elektromagnetische Strahlung reflektierende Struktur kann demnach flach oder eben sein, sie kann jedoch ebenfalls die Form eines Ärmels haben. Eine zweidimensionale elektromagnetische Strahlung reflektierende Struktur hat den Vorteil, dass die elektromagnetische Strahlung reflektierende Struktur gut auf einem Gewebe, einen Stoff oder ein Kleidungsstück befestigt werden kann, da die letzteren ebenfalls zweidimensional sind.

Bevorzugt ist die elektromagnetische Strahlung reflektierende Struktur auf eine Oberfläche eines Gewebes oder eines Kleidungsstückes gestempelt, gegossen und/oder gedruckt. Diese Herstellungsverfahren sind weit verbreitet können deshalb ökonomisch durchgeführt werden.

Gemäß einer weiteren Ausführungsform ist die elektromagnetische Strahlung reflektierende Struktur auf einem Gewebe angebracht oder in ein Gewebe integriert. Dies hat den Vorteil, dass das Gewebe auf dem Radar besser erkannt werden kann als ein gewöhnliches Gewebe, während gleichzeitig die Gewebestruktur nur sehr wenig bis gar nicht verändert wird.

Gemäß noch einer weiteren Ausführungsform ist die elektromagnetische Strahlung reflektierende Struktur ein Gewebe. Dies hat den Vorteil, dass das Gewebe selbst die elektromagnetische Strahlung reflektiert. In diesem Fall muss die elektromagnetische Strahlung reflektierende Struktur nicht erst in ein Gewebe oder ein Kleidungsstück integriert werden, sondern ist bereits selbst ein Gewebe. In diesem Fall sind die Fasern oder die Bestandteile des Gewebes selbst eine elektromagnetische Strahlung reflektierende Struktur.

Bevorzugt ist das Gewebe Teil eines Stoffes oder eines Kleidungsstücks. Dies hat den Vorteil, dass der Stoff oder das Kleidungsstück auf dem Radar besser erkannt werden kann und gleichzeitig der Träger des Stoffes oder des Kleidungsstücks nur minimale bis gar keine Änderungen an dem Stoff oder dem Kleidungsstück bemerkt.

Gemäß einer anderen Ausführungsform ist das Gewebe an oder auf einem Stoff oder an oder auf einem Kleidungsstück angebracht oder befestigt. Die hiermit verbundenen Vorteile wurden bereits oben erwähnt.

Bevorzugt weist das Gewebe oder die Struktur Baumwolle, einen Kunststoff, einen mit einer elektrisch leitenden Beschichtung beschichteten Kunststoff und / oder ein Metall auf. Hierbei ist die Baumwolle, der Kunststoff, der mit einer elektrisch leitenden Beschichtung beschichteten Kunststoff oder das Metall bevorzugt als Fasern oder Drähte ausgeführt. Durch diese Kombination kann vorteilhafterweise ein Gewebe mit einer elektromagnetische Strahlung reflektierenden Struktur hergestellt werden.

Gemäß einer weiteren Ausführungsform weist die Struktur oder das Gewebe Fasern auf, wobei mindestens eine Faser mindestens zwei Materialien der Liste, welche aus Kunststoff, mit einer elektrisch leitenden Beschichtung beschichteten Kunststoff, Metall und/oder Baumwolle besteht, aufweist.

Gemäß einer anderen Ausführungsform weist die elektromagnetische Strahlung reflektierende Struktur oder das Gewebe ein Metall oder einen mit einer elektrisch leitenden Beschichtung beschichteten Kunststoff auf. Diese beiden Stoffe können Teil der elektromagnetische Strahlung reflektierenden Struktur sein.

Gemäß einer weiteren Ausführungsform weist die elektromagnetische Strahlung reflektierende Struktur einen Transponder auf, der ausgeführt und eingerichtet ist, ein Signal zu reflektieren. Ein Transponder ist sehr kostengünstig und klein baulich herstellbar.

Bevorzugt ist der Transponder ein passiver Transponder. Dies hat den Vorteil, dass der Transponder keine eigene Stromquelle benötigt. Bevorzugt weist das Signal mindestens eine kodierte Information auf.

Gemäß einer weiteren Ausführungsform ist der Transponder als RFID-Label oder als RFID-Tag ausgeführt. Die RFID-Technik ist standardisiert und weit verbreitet.

Das Kleidungsstück weist eine obenstehend beschriebene elektromagnetische Strahlung reflektierende Struktur auf. Das Kleidungsstück hat den Vorteil, dass es genauso wie ein normales Kleidungsstück getragen werden kann, jedoch zusätzlich im Radarsignal wesentlich besser erkannt werden kann. Wenn das Kleidungsstück von einem Benutzer getragen wird, kann ein Automobilradar den Benutzer wesentlich besser erkennen.

Unter einem Kleidungsstück kann vorliegend ein Hemd, eine Hose, ein Stirnband, eine Mütze, jedoch auch ein Schuh verstanden werden. Im Fall des Schuhs wird die elektromagnetische Strahlung reflektierende Struktur bevorzugt in oder an einem Textilteil, welches den Fußrücken bedeckt, angeordnet.

Die elektromagnetische Strahlung reflektierende Struktur eignet sich zur Verwendung einer elektromagnetische Strahlung reflektierenden Struktur an einer Stelle eines Körpers eines Benutzers, welche bei einer gewöhnlichen Fortbewegung des Benutzers aufgrund ihrer Anbringung an der Stelle des Körpers einen Mikro-Doppler-Effekt erzeugt, so dass ein Radarquerschnitt des Benutzers vergrößert wird. Dies bewirkt eine Vergrößerung des Radarquerschnitts des Benutzers. Hierbei weist ein Material der elektromagnetische Strahlung reflektierenden Struktur eine Leitfähigkeit unter 100 S/m, eine relative Permeabilität zwischen 100 und 105 und eine relative Permittivität zwischen 1 und 14 oder eine Leitfähigkeit unter 100 S/m, eine relative Permeabilität zwischen 1 und 100 und eine relative Permittivität zwischen 7 und 14 auf, und ist eine Oberfläche der elektromagnetische Strahlung reflektierenden Struktur größer als 1000 mm$^2$.

Das System zur Detektion eines Benutzers, welcher sich gewöhnlich fortbewegt, weist einen Radar-Sendeempfänger auf. Der Radar-Sendeempfänger sendet und empfängt Radarsignale. Hierbei ist der Radar-Sendeempfänger so ausgeführt und eingerichtet, dass der Radar-Sendeempfänger in einem von einer elektromagnetische Strahlung reflektierenden Struktur reflektierten Radarsignal eine Veränderung einer Mikro-Doppler-Komponente detektieren kann.

Die elektromagnetische Strahlung reflektierende Struktur dient dem Reflektieren eines vom Radar-Sendeempfänger gesendeten Radarsignals.

Ein solches System kann in ein Automobil eingebaut werden, wo es vorteilhafterweise einen Notbremsassistenten unterstützen kann, indem es einen Benutzer im Straßenverkehr einfacher detektiert.

Die Veränderung der Mikro-Doppler-Komponente ist bevorzugt eine Erhöhung. Dies hat den Vorteil, dass die Veränderung der Mikro-Doppler-Komponente leichter detektierbar ist.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen.

Kurze Beschreibung der Zeichnung

Ausführungsbeispiele der Erfindung sind in den Zeichnungen dargestellt und werden in der nachfolgenden Beschreibung näher erläutert.

Figur 1 zeigt jeweils ein Kleidungsstück mit einer elektromagnetische Strahlung reflektierenden Struktur.
Figur 2 zeigt eine Ausführungsform einer elektromagnetische Strahlung reflektierenden Struktur bzw. einem Kleidungsstück gemäß einem Ausführungsbeispiel der Erfindung.

Ausführungsbeispiele der Erfindung

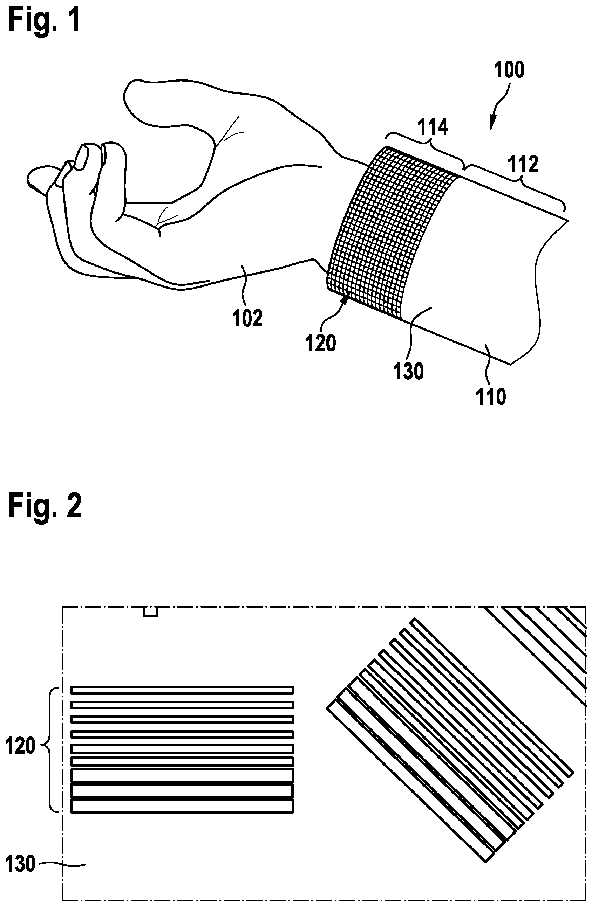

Figur 1 zeigt ein Kleidungsstück 100, welches am Arm in der Nähe einer Hand 102 getragen wird. Das Kleidungsstück 100 weist einen Ärmel 110 auf. In einem ersten Bereich 112 weist der Ärmel ein gewöhnliches Gewebe oder einen gewöhnlichen Stoff 130 auf, wie er im Stand der Technik bekannt ist. In einem zweiten Bereich 114 weist der Ärmel eine elektromagnetische Strahlung reflektierende Struktur 120 in Form eines Drahtgeflechtes auf. Hierbei ist das Drahtgeflecht in den gewöhnlichen Stoff integriert. Der zweite Bereich 114 ist näher am Ende des Ärmels 110 als der erste Bereich 112.

Figur 2 zeigt eine elektromagnetische Strahlung reflektierende Struktur 120, welche auf einem Stoff 130 aufgedruckt ist. Die elektromagnetische Strahlung reflektierende Struktur 120 der Figur 2 wird in der Ausführungsform der Figur 1 anstelle der dort abgebildeten elektromagnetische Strahlung reflektierenden Struktur 120 benutzt.

## Patentansprüche

1. Elektromagnetische Strahlung reflektierende Struktur (120), welche an einer Stelle eines Körpers eines Benutzers angebracht ist,

   wobei bei einer gewöhnlichen Fortbewegung des Benutzers die elektromagnetische Strahlung reflektierende Struktur (120) aufgrund ihrer Anbringung an der Stelle des Körpers einen Mikro-Doppler-Effekt erzeugt, so dass ein Radarquerschnitt des Benutzers vergrößert wird,
   wobei ein Material der elektromagnetische Strahlung reflektierenden Struktur (120) eine Leitfähigkeit unter 100 S/m, eine relative Permeabilität zwischen 100 und $10^5$ und eine relative Permittivität zwischen 1 und 14 oder eine Leitfähigkeit unter 100 S/m, eine relative Permeabilität zwischen 1 und 100 und eine relative Permittivität zwischen 7 und 14 aufweist, und eine Oberfläche der elektromagnetische Strahlung reflektierenden Struktur (120) größer als 1000 mm$^2$ ist.

2. Elektromagnetische Strahlung reflektierenden Struktur (120) gemäß Anspruch 1, **dadurch gekennzeichnet, dass** die elektromagnetische Strahlung reflektierende Struktur (120) einen Flächenfüllfaktor zwischen 80 und 100 % aufweist; und
   die Oberfläche der elektromagnetische Strahlung reflektierenden Struktur (120) größer als 2000 mm$^2$ ist.

3. Elektromagnetische Strahlung reflektierende Struktur (120) gemäß Anspruch 1, **dadurch gekennzeichnet, dass** die elektromagnetische Strahlung reflektierende Struktur (120) einen Flächenfüllfaktor zwischen 40 und 80 % aufweist; und
   die Oberfläche der elektromagnetische Strahlung reflektierenden Struktur (120) größer als 4000 mm$^2$ ist.

**4.** Elektromagnetische Strahlung reflektierende Struktur (120) gemäß Anspruch 1, **dadurch gekennzeichnet, dass** die elektromagnetische Strahlung reflektierende Struktur (120) einen Flächenfüllfaktor kleiner als 100 % aufweist; und

ein kleinster Abstand zwischen leitenden Teilen der elektromagnetische Strahlung reflektierenden Struktur (120) kleiner als 1,95 mm ist.

**5.** Elektromagnetische Strahlung reflektierende Struktur (120) gemäß einem der vorangegangenen Ansprüche, **dadurch gekennzeichnet, dass** der Radarquerschnitt der elektromagnetische Strahlung reflektierenden Struktur (120) größer oder gleich 1 dBm$^2$ ist.

**6.** Elektromagnetische Strahlung reflektierende Struktur (120) gemäß einem der vorangegangenen Ansprüche, **dadurch gekennzeichnet, dass** die Stelle des Körpers des Benutzers, an der die elektromagnetische Strahlung reflektierende Struktur (120) angebracht ist, an einem Arm oder einem Fuß ist.

**7.** Elektromagnetische Strahlung reflektierende Struktur (120) gemäß einem der vorangegangenen Ansprüche, **dadurch gekennzeichnet, dass** die elektromagnetische Strahlung reflektierende Struktur (120) gestempelt, gegossen und/oder gedruckt ist.

**8.** Elektromagnetische Strahlung reflektierende Struktur (120) gemäß einem der vorangegangenen Ansprüche, **dadurch gekennzeichnet, dass** die elektromagnetische Strahlung reflektierende Struktur (120) auf einem Gewebe (113) angebracht ist.

**9.** Elektromagnetische Strahlung reflektierende Struktur (120) gemäß dem vorangegangenen Anspruch, **dadurch gekennzeichnet, dass** das Gewebe Baumwolle, Kunststoff und/oder Metall aufweist.

**10.** Elektromagnetische Strahlung reflektierende Struktur (120) gemäß einem der vorangegangenen Ansprüche, ferner aufweisend einen Transponder, der ausgeführt und eingerichtet ist, ein Signal zu reflektieren.

**11.** Elektromagnetische Strahlung reflektierende Struktur (120) gemäß dem vorangegangenen Anspruch, **dadurch gekennzeichnet, dass** der Transponder als RFID-Label oder als RFID-Tag ausgeführt ist.

**12.** Kleidungsstück (100) mit einer elektromagnetische Strahlung reflektierenden Struktur (120) nach einem der vorangegangenen Ansprüche.

**13.** Verwendung einer elektromagnetische Strahlung reflektierenden Struktur (120) an einer Stelle eines Körpers eines Benutzers, welche bei einer gewöhnlichen Fortbewegung des Benutzers aufgrund ihrer Anbringung an der Stelle des Körpers einen Mikro-Doppler-Effekt erzeugt, so dass ein Radarquerschnitt des Benutzers vergrößert wird, **dadurch gekennzeichnet, dass**

ein Material der elektromagnetische Strahlung reflektierenden Struktur (120) eine Leitfähigkeit unter 100 S/m, eine relative Permeabilität zwischen 100 und 10$^5$ und eine relative Permittivität zwischen 1 und 14 oder eine Leitfähigkeit unter 100 S/m, eine relative Permeabilität zwischen 1 und 100 und eine relative Permittivität zwischen 7 und 14 aufweist, und eine Oberfläche der elektromagnetische Strahlung reflektierenden Struktur (120) größer als 1000 mm$^2$ ist.

**14.** System zur Detektion eines Benutzers, welcher sich gewöhnlich fortbewegt, wobei das System aufweist: einen Radar-Sendeempfänger zum Senden und Empfangen von Radarsignalen; wobei der Radar-Sendeempfänger so ausgeführt und eingerichtet ist, dass der Radar-Sendeempfänger in einem von einer elektromagnetische Strahlung reflektierenden Struktur reflektierten Radarsignal eine Veränderung einer Mikro-Doppler-Komponente detektieren kann, wobei die elektromagnetische Strahlung reflektierende Struktur eine elektromagnetische Strahlung reflektierende Struktur gemäß einem der Ansprüche 1 bis 11 ist.

**Claims**

**1.** Structure (120) reflecting electromagnetic radiation, which is attached at a location on a body of a user,

wherein the structure (120) reflecting electromagnetic radiation produces a micro-Doppler effect during typical locomotion of the user due to the structure being attached at the location on the body, with the result that a radar cross section of the user is enlarged,

wherein a material of the structure (120) reflecting electromagnetic radiation has a conductivity under 100 S/m, a relative permeability between 100 and $10^5$ and a relative permittivity between 1 and 14, or a conductivity under 100 S/m, a relative permeability between 1 and 100 and a relative permittivity between 7 and 14, and a surface area of the structure (120) reflecting electromagnetic radiation is greater than 1000 mm$^2$.

2.  Structure (120) reflecting electromagnetic radiation according to Claim 1, **characterized in that** the structure (120) reflecting electromagnetic radiation has an area fill factor of between 80 and 100%; and

the surface area of the structure (120) reflecting electromagnetic radiation is greater than 2000 mm$^2$.

3.  Structure (120) reflecting electromagnetic radiation according to Claim 1, **characterized in that** the structure (120) reflecting electromagnetic radiation has an area fill factor of between 40 and 80%; and

the surface area of the structure (120) reflecting electromagnetic radiation is greater than 4000 mm$^2$.

4.  Structure (120) reflecting electromagnetic radiation according to Claim 1, **characterized in that** the structure (120) reflecting electromagnetic radiation has an area fill factor of smaller than 100%; and

the smallest distance between conductive parts of the structure (120) reflecting electromagnetic radiation is smaller than 1.95 mm.

5.  Structure (120) reflecting electromagnetic radiation according to any of the preceding claims, **characterized in that** the radar cross section of the structure (120) reflecting electromagnetic radiation is greater than or equal to 1 dBm$^2$.

6.  Structure (120) reflecting electromagnetic radiation according to any of the preceding claims, **characterized in that** the location on the body of the user at which the structure (120) reflecting electromagnetic radiation is attached is on an arm or a foot.

7.  Structure (120) reflecting electromagnetic radiation according to any of the preceding claims, **characterized in that** the structure (120) reflecting electromagnetic radiation is stamped, cast and/or printed.

8.  Structure (120) reflecting electromagnetic radiation according to any of the preceding claims, **characterized in that** the structure (120) reflecting electromagnetic radiation is attached to a fabric (113).

9.  Structure (120) reflecting electromagnetic radiation according to the preceding claim, **characterized in that** the fabric includes cotton, plastic and/or metal.

10. Structure (120) reflecting electromagnetic radiation according to any of the preceding claims, furthermore having a transponder which is designed and configured to reflect a signal.

11. Structure (120) reflecting electromagnetic radiation according to the preceding claim, **characterized in that** the transponder is designed as an RFID label or as an RFID tag.

12. Garment (100) having a structure (120) reflecting electromagnetic radiation according to any of the preceding claims.

13. Use of a structure (120) reflecting electromagnetic radiation at a location on a body of a user, which produces a micro-Doppler effect during typical locomotion of the user due to the structure being attached at the location on the body, with the result that a radar cross section of the user is enlarged,
**characterized in that**
a material of the structure (120) reflecting electromagnetic radiation has a conductivity under 100 S/m, a relative permeability between 100 and $10^5$ and a relative permittivity between 1 and 14, or a conductivity under 100 S/m, a relative permeability between 1 and 100 and a relative permittivity between 7 and 14, and a surface area of the structure (120) reflecting electromagnetic radiation is greater than 1000 mm$^2$.

14. System for detecting a user who is moving around in a typical manner, wherein the system has: a radar transceiver for transmitting and receiving radar signals; wherein the radar transceiver is designed and configured such that the radar transceiver can detect a change in a micro-Doppler component in a radar signal reflected by a structure reflecting electromagnetic radiation, wherein the structure reflecting electromagnetic radiation is a structure reflecting electromagnetic radiation according to any of Claims 1 to 11.

**Revendications**

1. Structure réflectrice de rayonnement électromagnétique (120), laquelle est fixée à une partie du corps d'un utilisateur, pendant le mouvement normal de l'utilisateur, la structure réflectrice de rayonnement électromagnétique (120) générant un effet micro-Doppler en raison de sa fixation à l'emplacement du corps de façon à agrandir une section radar de l'utilisateur,
un matériau de la structure réflectrice de rayonnement électromagnétique (120) ayant une conductivité inférieure à 100 S/m, une perméabilité relative comprise entre 100 et $10^5$ et une permittivité relative comprise entre 1 et 14 ou une conductivité inférieure à 100 S/m, une perméabilité relative comprise entre 1 et 100 et une permittivité relative comprise entre 7 et 14, et une surface de la structure réflectrice de rayonnement électromagnétique (120) étant supérieure à 1000 mm$^2$.

2. Structure réflectrice de rayonnement électromagnétique (120) selon la revendication 1, **caractérisée en ce que** la structure réflectrice de rayonnement électromagnétique (120) a un facteur de remplissage de surface compris entre 80 et 100 % ; et
la surface de la structure réflectrice de rayonnement électromagnétique (120) est supérieure à 2000 mm$^2$.

3. Structure réflectrice de rayonnement électromagnétique (120) selon la revendication 1, **caractérisée en ce que** la structure réflectrice de rayonnement électromagnétique (120) a un facteur de remplissage de surface compris entre 40 et 80 % ; et
la surface de la structure réflectrice de rayonnement électromagnétique (120) est supérieure à 4000 mm$^2$.

4. Structure réflectrice de rayonnement électromagnétique (120) selon la revendication 1, **caractérisée en ce que** la structure réflectrice de rayonnement électromagnétique (120) a un facteur de remplissage de surface inférieur à 100 % ; et
la plus petite distance entre les parties conductrices de la structure réflectrice de rayonnement électromagnétique (120) est inférieure à 1,95 mm.

5. Structure réflectrice de rayonnement électromagnétique (120) selon l'une des revendications précédentes, **caractérisée en ce que** la section radar de la structure réflectrice de rayonnement électromagnétique (120) est supérieure ou égale à 1 dBm2.

6. Structure réflectrice de rayonnement électromagnétique (120) selon l'une des revendications précédentes, **caractérisée en ce que** l'emplacement du corps de l'utilisateur où la structure réflectrice de rayonnement électromagnétique (120) est fixée est un bras ou un pied.

7. Structure réflectrice de rayonnement électromagnétique (120) selon l'une des revendications précédentes, **caractérisée en ce que** la structure réflectrice de rayonnement électromagnétique (120) est estampée, coulée et/ou imprimée.

8. Structure réflectrice de rayonnement électromagnétique (120) selon l'une des revendications précédentes, **caractérisée en ce que** la structure réflectrice de rayonnement électromagnétique (120) est fixée à un tissu (113).

9. Structure réflectrice de rayonnement électromagnétique (120) selon la revendication précédente, **caractérisée en ce que** le tissu comprend le coton, une matière synthétique et/ou un métal.

10. Structure réflectrice de rayonnement électromagnétique (120) selon l'une des revendications précédentes, comprenant en outre un transpondeur qui est conçu et réalisé pour réfléchir un signal.

11. Structure réflectrice de rayonnement électromagnétique (120) selon la revendication précédente, **caractérisée en ce que** le transpondeur est réalisé sous la forme d'une puce RFID ou sous la forme d'une étiquette RFID.

12. Vêtement (100) comprenant une structure réflectrice de rayonnement électromagnétique (120) selon l'une des revendications précédentes.

13. Utilisation d'une structure réflectrice de rayonnement électromagnétique (120) en un emplacement du corps d'un utilisateur, laquelle structure génère un effet micro-Doppler lors du mouvement normal de l'utilisateur en raison de sa fixation à l'emplacement du corps de façon à agrandir une section radar de l'utilisateur, **caractérisée en ce que**

un matériau de la structure réflectrice de rayonnement électromagnétique (120) présente une conductivité inférieure à 100 S/m, une perméabilité relative comprise entre 100 et $10^5$ et une permittivité relative comprise entre 1 et 14 ou une conductivité inférieure à 100 S/m, une perméabilité relative comprise entre 1 et 100 et une permittivité relative comprise entre 7 et 14, et une surface de la structure réflectrice de rayonnement électromagnétique (120) est supérieure à 1000 mm$^2$.

14. Système de détection d'un utilisateur qui se déplace de manière habituelle, le système comportant : un émetteur-récepteur radar destiné à émettre et recevoir des signaux radar ; l'émetteur-récepteur radar étant conçu et réalisé de manière à ce que l'émetteur-récepteur radar puisse détecter une variation d'une composante micro-Doppler dans un signal radar réfléchi par une structure réflectrice de rayonnement électromagnétique, la structure réflectrice de rayonnement électromagnétique étant une structure réflectrice de rayonnement électromagnétique selon l'une des revendications 1 à 11.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009021851 A1
- EP 1294052 A1

- JP 2004275699 A